# EUROPÄISCHE PATENTANMELDUNG

(11) **EP 0 870 420 A1**
(43) Veröffentlichungstag der Anmeldung: **14.10.1998**
(21) Anmeldenummer: 98105432.3
(22) Anmeldetag: 25.03.1998
(51) Int. Cl.: A01B 45/02

(54) **Rasenperforationsmaschine**

(30) Priorität: 09.04.1997 DE 19714667
(71) Anmelder: Wolf-Garten GmbH & Co. KG, 57518 Betzdorf (DE)
(72) Erfinder: Brammertz, Klaus, 56244 Helferskirchen (DE); Schütz, Eberhard, 57567 Daaden (DE)
(74) Vertreter: Koch, Günther, Dipl.-Ing.

(57) **Zusammenfassung**

Bei einer Rasenperforationsmaschine ist die die Lochpfeifen (12) tragende Walze (10) in zwei Walzenhälften (10A,10B) unterteilt, um bei engen Kurvenfahrten einen Geschwindigkeitsausgleich zu erzielen. Jeder Walzenhälfte (10A,10B) ist eine mit einem gemeinsamen Saatgutbehälter verbundene Saatgutaustragsvorrichtung zugeordnet, und die Streuwellen (40A,40B) sind mit dem jeweiligen Walzenabschnitt (10A,10B) antriebsmäßig verbunden, so daß die Austragsmenge auch bei Kurvenfahrten jeweils der Laufgeschwindigkeit des zugeordneten Walzenabschnitts entspricht.

## Beschreibung

Die Erfindung betrifft eine Rasenperforationsmaschine der in der DE 26 50 772 C2 beschriebenen Bauart. Diese Perforationsmaschine weist eine auf dem Boden abrollbare Perforationswalze auf, deren Mantel verschwenkbare Lochpfeifen trägt, derart, daß sie vom Beginn bis zum Ende im wesentlichen senkrecht in Bodenberührung zum Boden verbleiben. In Laufrichtung vor der Walzenachse ist ein Fangbehälter angeordnet, von dem das ausgestanzte Erdreich aufgenommen wird.

Die US-A-5 101 910 zeigt einen Aerifizierungsvorsatz, der an der Frontseite eines Rasenmähers anbaubar ist und drei auf einer Welle unabhängig voneinander drehbare Stachelwalzen trägt, deren gabelförmiger Tragrahmen um einen vertikalen Drehzapfen gegenüber dem Maschinenrahmen drehbar ist. Dadurch, daß die Walzenabschnitte unabhängig voneinander drehbar sind, soll ein Schwenken um den Drehzapfen herum erleichtert werden.

Die FR 2 703 877 A1 zeigt eine Rasenbearbeitungsmaschine mit drei in Fahrtrichtung hintereinander parallelachsig angeordneten Walzen und zwischen den Walzen angeordneten Austragsvorrichtungen für Dünger bzw. Samen. Die in Fahrtrichtung vorn liegende Walze ist als Stachelwalze ausgebildet, die die Grasnarbe aerifiziert. Hinter dieser Stachelwalze ist eine über die gesamte Breite verlaufende Austragsvorrichtung vorgesehen, die mit Dünger gespeist wird, der über die gesamte Breite hinter der Stachelwalze auf den Boden abgelegt wird.

Auf die Stachelwalze folgt eine Perforationswalze, die Löcher in das Erdreich einstanzt, in die aus der nachfolgenden Verteilereinrichtung Samen eingelegt wird. Der Samenbehälter ist wie der Düngerbehälter ausgebildet, und über die Austragsvorrichtung wird der Samen über die gesamte Breite gleichmäßig ausgetragen. Dadurch kommt der Samen einerseits in den Löchern und andererseits neben den Löchern zu liegen.

Die GB 21 60 401A zeigt eine an einem Traktor anhängbare Rasenbearbeitungsmaschine mit einer Schneidklingen tragenden Walze zur Aerifizierung des Rasens. Die Walze kann mit Ballast gefüllt werden, um den Auflagedruck zu erhöhen.

Die US-A-3 739 857 beschreibt eine landwirtschaftliche Maschine mit zwei am Umfang mit Stanzhülsen ausgestatten, im Abstand zueinander auf einer Welle sitzenden Rädern. Innerhalb der Stanzhülsen sind Ausstanzkolben verschiebbar, die in das Erdreich eindringen. Über den Stanzrädern ist ein Behälter angeordnet, der mit Gewichten belastet werden kann. Das Gerät dient dazu, die Pflanzenteile auszustanzen, um sie an einer anderen Stelle wieder anzupflanzen. Die Stanzräder sind über eine Handhebeanordnung vom Boden abhebbar.

Der Erfindung liegt die Aufgabe zugrunde, eine Rasenperforationsmaschine mit einer Saataustragsvorrichtung zu schaffen, die eine große Arbeitsbreite aufweist und auch bei Kurvenfahrt eine im wesentlichen gleichförmige Perforation und gezielte Saatgutaustragung und eine günstige Ablage des ausgestanzten Erdgutes gewährleistet.

Gelöst wird die gestellte Aufgabe durch die Gesamtheit der im Patentanspruch 1 angegebenen Merkmale. Dadurch, daß die Walzenabschnitte bei Kurvenfahrt mit unterschiedlicher Drehzahl umlaufen, kann die Differenzstrecke bei Kurvenfahrt im wesentlichen ausgeglichen werden und das Lochmuster kann erhalten bleiben, wobei infolge der drehzahlabhängigen Saatgutzuführung auch die Verteilung des Samens gezielt in die ausgestanzten Löcher im wesentlichen gleichförmig erhalten bleiben kann.

Ausgestaltungen der Erfindung ergeben sich aus den Unteransprüchen.

Nachstehend wird ein Ausführungsbeispiel der Erfindung anhand der Zeichnung beschrieben. In der Zeichnung zeigen:

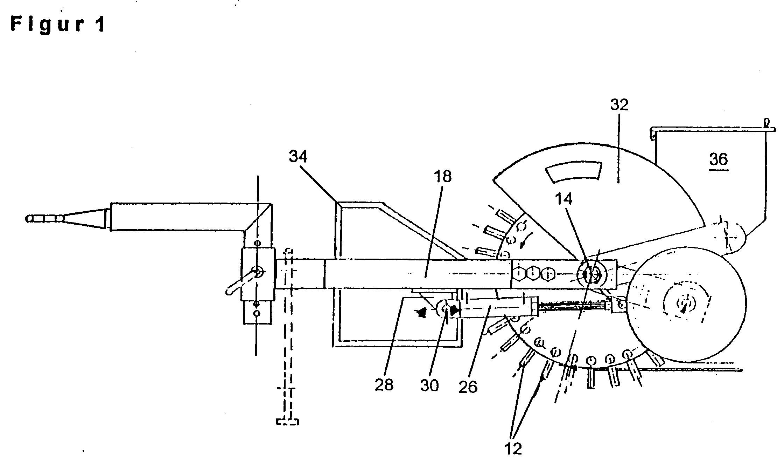

- Fig. 1: zeigt eine schematische Seitenansicht einer erfindungsgemäß ausgebildeten Rasenperforationsmaschine;

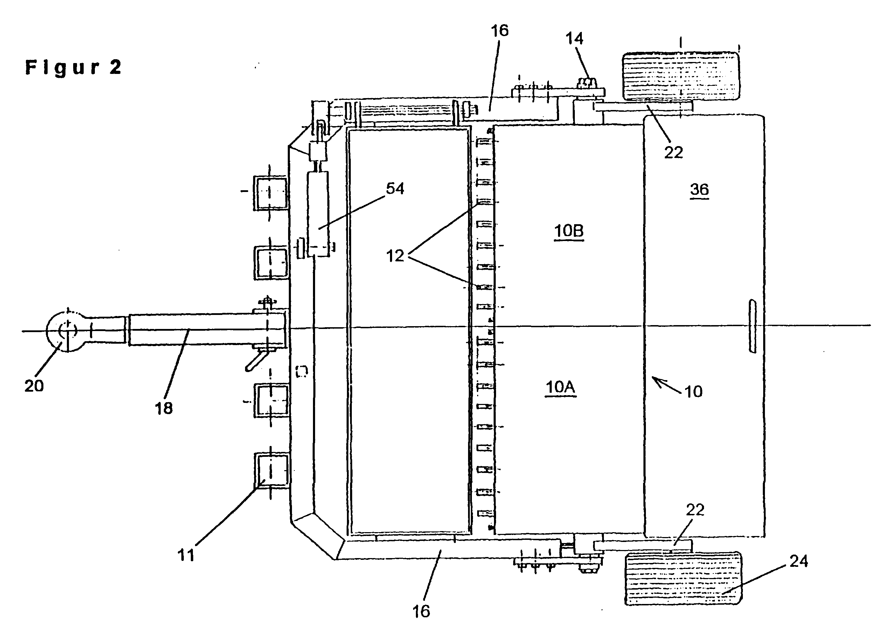

- Fig. 2: zeigt eine Draufsicht auf die in Fig. 1 dargestellte Rasenperforationsmaschine;

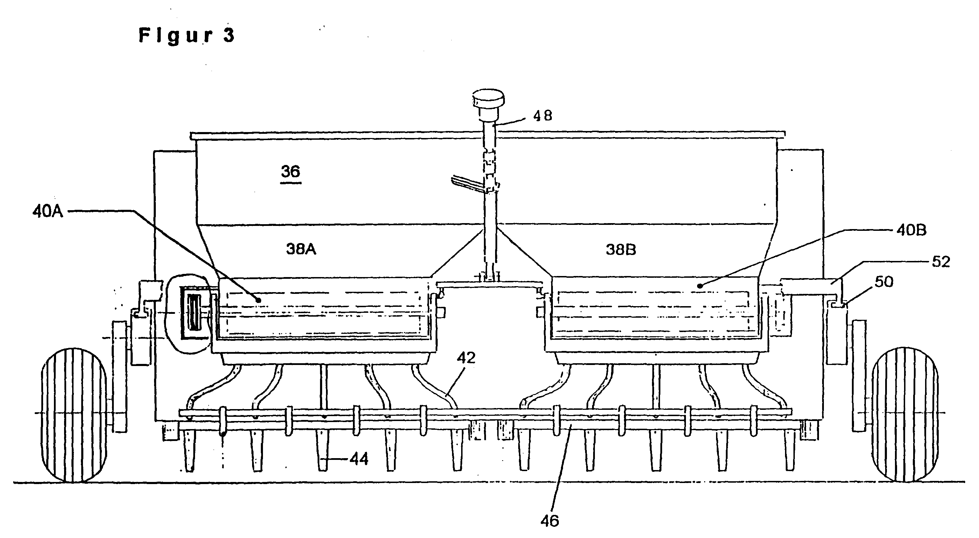

- Fig. 3: ist eine Ansicht der Maschine gemäß Fig. 1 und 2 von hinten.

Die Rasenperforationsmaschine weist eine aus zwei Hälften 10A und 10B bestehende Perforationswalze 10 auf, die auf ihrem Mantel Lochpfeifen 12 zum Einstechen in das Erdreich trägt. Diese Lochpfeifen 12 sind um parallel zur Walzenachse verlaufende Achsen derart schwenkbar, daß die Längsachsen der Lochpfeifen von Beginn bis zum Ende der Bodenberührung im wesentlichen senkrecht zum Boden verbleiben. Die beiden Walzenhälften 10A, 10B sind auf einer Welle 14 unabhängig voneinander drehbar gelagert. Dadurch wird es möglich, die Differenzstrecke bei enger Kurvenfahrt etwas auszugleichen, um eine Beschädigung des Rasens durch äußere Lochpfeifen zu verhindern.

Die Welle 14 wird von Zwei Armen 16 eines gabelartigen Rahmens 18 getragen, der eine Anhängerkupplung 20 zum Anhängen an eine Zugmaschine aufweist. Der Rahmen ist über ein Winkelstück und eine Führungshülse höhenverstellbar. An ihren äußeren Enden trägt die Welle 14 Schwenkarme 22, an deren Enden Laufräder 24 gelagert sind. Die Schwenkarme 22 sind über einen Kolbenantrieb 26 mit einer am Gabelrahmen 18 angeschweißten Konsole 28 über einen Zapfen 30 schwenkbar verbunden. Hierdurch kann die Eindringtiefe der Lochpfeifen 12 verändert werden, und es kann die Perforationswalze angehoben werden, damit die Maschine bei Straßenfahrt auf den Laufrädern 24 abrollen kann. Um den vorderen und oberen Walzenmantel herum ist ein Leitblech geführt, welches die aus den Lochpfeifen radial nach außen austretenden Erdteilchen nach dem Inneren eines Fangbehälters 34 leitet, der vor der Perforationswalze 10 auf dem Rahmen 18 befestigt ist.

Hinter den beiden Walzenhälften 10A und 10B ist ein Saatgutkasten 36 angebaut, der zwei den Walzenhälften 10A und 10B zugeordnete Auslaßtrichter 38A, 38B aufweist, die je eine Streuwelle 40A, 40B mit Austragflügeln aufnehmen. Jeder Streuwelle wird über Keilriemen oder eine Kette von der jeweiligen Walzenhälfte 10A, 10B angetrieben, und dies bedingt, daß bei Kurvenfahrt an der Innenkurve die geringere Drehzahl der Streuwelle weniger Saatgut austrägt als auf der Außenkurve.

An die Auslaßtrichter 38A, 38B schließen Saatgutauslaufschläuche 42 an, die mit Austragszinken 44 in Verbindung stehen, die an einem federnd abgestützten Träger 46 verschiebbar derart befestigt sind, daß sie auf die Lochreihen ausgerichtet werden können, die von den Lochpfeifen eingestanzt werden. Eine zentrale Stellvorrichtung 48 ermöglicht eine Einstellung der Austragsmenge beider Auslauftrichter und ein Absperren derselben.

In einer am hinteren Ende der Maschine vorgesehene Halterung 50 können Zusatzgewichte 52 eingelegt werden, und durch Verschieben der Halterungen nach vorn und hinten kann der auf den Perforationswalzen lastende Druck verändert werden, und durch Verschieben dieser Halterungen nach hinten erhöht sich der Eindringdruck, ohne die Gewichtsmasse zu erhöhen, woraus sich der Vorteil eines geringen Transportgewichtes ergibt.

Durch den Fangbehälter 34 kann großflächig das ausgestanzte Material aufgesammelt und an anderer Stelle abgelagert werden. Um das Entleeren dieses in gefülltem Zustand sehr schweren Behälters zu erleichtern und zu beschleunigen, ist ein weiterer Hydraulikantrieb 54 vorgesehen, der den Fangbehälter 34, vom Schlepper aus gesteuert, um eine in Längsrichtung verlaufende Achse kippt, so daß der Inhalt seitlich ausgeladen werden kann.

### Bezugszeichenliste

- 10,A,B: Perforationswalze
- 12: Lochpfeifen
- 14: Welle
- 16: Arme
- 18: Gabelrahmen
- 20: Kupplung
- 22: Schwenkarme
- 24: Laufräder
- 26: Kolbenantrieb
- 28: Konsole
- 30: Zapfen
- 32: Leitblech
- 34: Fangbehälter
- 36: Saatgutkasten
- 38A,B: Auslaßtrichter
- 40A,B: Streuwelle
- 42: Saatgutauslaufschläuche
- 44: Austragszinken
- 46: Träger
- 48: Stellvorrichtung
- 50: Halterung
- 52: Zusatzgewichte
- 54: Hydraulikantrieb

## Patentansprüche

1. Rasenperforationsmaschine zum Einstechen von Lochreihen in das Erdreich mit den folgenden Merkmalen:
- eine auf dem Boden abrollbare Perforationswalze (10) lagert im Mantel Lochpfeifen (12) schwenkbar um parallel zur Walzenachse verlaufende Achsen derart, daß die Längsachsen der Lochpfeifen (12) von Beginn bis zum Ende der Bodenberührung im wesentlichen senkrecht zum Boden verbleiben;
- die Perforationswalze (10) ist in mehrere Walzenabschnitte (10A, 10B) unterteilt, die axial aufeinander ausgerichtet und auf einer vom Maschinenrahmen abgestützten Welle (14) unabhängig voneinander drehbar sind;
- den Perforationswalzenabschnitten (10A, 10B) ist ein Saatgutkasten (36) nachgeschaltet, an den sich für jeden der unabhängig voneinander drehbaren Walzenabschnitte (10A, 10B) ein gesonderter Auslaßtrichter (38A, 38B) mit Streuwelle (40A, 40B) anschließt;
- die Streuwellen (40A, 40B) werden von den zugeordneten Perforationswalzenabschnitten (10A, 10B) über Keilriemen oder Ketten unabhängig voneinander angetrieben;
- an die Auslaßtrichter (38A, 38B) schließen Saatgutauslaufschläuche (42) an, die mit Austragszinken (44) in Verbindung stehen, die an einem federnd abgestützten Träger (46) verschiebbar derart befestigt sind, daß sie auf die Lochreihen ausrichtbar sind, die von den Lochpfeifen (12) eingestanzt werden;
- der Maschinenrahmen (18) in Laufrichtung vor den Perforationswalzenabschnitten (10A, 10B) einen Fangbehälter (34) trägt, der um eine Kippachse verschwenkbar und entleerbar ist;
- die Kippachse verläuft parallel zur Maschinenlängsachse und als Schwenkantrieb ist ein Hydraulikantrieb (54) vorgesehen.

2. Rasenperforationsmaschine nach Anspruch 1,
dadurch gekennzeichnet, daß beiden Saatgutauslässen eine zentrale Stellvorrichtung (48) zugeordnet ist.

3. Rasenperforationsmaschine nach einem der Ansprüche 1 und 2,
dadurch gekennzeichnet, daß auf der Rückseite der Maschine eine Halterung (50) zum Einsatz von Zusatzgewichten (52) vorgesehen ist.

4. Rasenperforationsmaschine nach einem der Ansprüche 1 bis 3,
dadurch gekennzeichnet, daß die die Perforationswalzenabschnitte (10A, 10B) tragende Welle (14) an einem Gabelrahmenaufbau (18) gelagert ist, und daß um diese Welle (14) Schwenkarme (22) angelenkt sind, die Laufräder (24) tragen, wobei die Schwenkarme (22) über einen Kolbenantrieb (26) mit dem Rahmen (18) verbunden sind.

5. Rasenperforationsmaschine nach Anspruch 4,
dadurch gekennzeichnet, daß der Anlenkpunkt des Kolbenantriebs (26) am Rahmen (18) verschiebbar ist und die eingestellte Tiefe an einer Skala ablesbar ist.
